# FASCICULE DE BREVET EUROPEEN

(11) **EP 1 269 116 B1**
(45) Date de publication et mention de la délivrance du brevet: **01.06.2005**
(21) Numéro de dépôt: 01903784.5
(22) Date de dépôt: 20.02.2001
(51) Int. Cl.: G01C 5/06, G01S 5/14

(54) **RECEPTEUR GPS PORTABLE UTILISANT UN ALTIMETRE BAROMETRIQUE**
TRAGBARER GPS-EMPFÄNGER, WELCHER EINEN BAROMETRISCHEN HÖHENMESSER VERWENDET
PORTABLE GPS RECEIVER USING A BAROMETRIC ALTIMETER

(30) Priorité: 22.03.2000 EP 00201021
(43) Date de publication de la demande: 02.01.2003
(73) Titulaire: ASULAB S.A., 2074 Marin (CH)
(72) Inventeur: FARINE, Pierre-André, CH-2000 Neuchâtel (CH); ETIENNE, Jean-Daniel, CH-2206 Les Geneveys-sur-Coffrane (CH)
(74) Mandataire: Surmely, Gérard
(86) Numéro de dépôt international: PCT/EP2001/001891
(87) Numéro de publication internationale: WO 2001/071281

(56) Documents cités:
- EP-A- 0 670 532
- US-A- 5 210 540
- US-A- 5 646 857
- PATENT ABSTRACTS OF JAPAN vol. 1999, no. 11, 30 septembre 1999 (1999-09-30) & JP 11 166827 A (SEIKO INSTRUMENTS INC), 22 juin 1999 (1999-06-22)
- PATENT ABSTRACTS OF JAPAN vol. 1997, no. 10, 31 octobre 1997 (1997-10-31) & JP 09 145814 A (HARADA IND CO LTD), 6 juin 1997 (1997-06-06)

## Description

L'invention concerne un dispositif portable pour la détermination des positions horizontale et verticale comprenant un altimètre à capteur de pression calibré à une hauteur initiale prédéterminée, un récepteur de signaux GPS agencé pour recevoir des signaux provenant de plusieurs satellites afin de calculer des données de positions du dispositif, une unité de traitement recevant les données de positions du récepteur et une valeur de hauteur de l'altimètre basée sur des mesures de pression du capteur de pression par rapport à la hauteur prédéterminée, et des moyens d'affichage des positions horizontale et verticale du dispositif traitées et fournies par l'unité de traitement. Le dispositif est alimenté par une batterie ou un accumulateur à faible consommation.

L'invention concerne également un procédé de détermination des positions horizontale et verticale pour la mise en action dudit dispositif.

L'invention concerne également une utilisation du dispositif pour l'évaluation des conditions météorologiques.

L'altimètre peut être calibré grâce aux données fournies par le récepteur GPS selon un point géographique connu enregistré par exemple dans une mémoire qui peut lui être associée.

Une fois calibré le capteur de pression est capable de fournir des mesures de variations de pression pour pouvoir donner l'altitude précisément pendant une période de temps déterminée en fonction également des conditions météorologiques par exemple si le dispositif est utilisé pour une randonnée.

Actuellement, la connaissance de sa position géographique précise dans tout genre d'activités, que ce soit par exemple au niveau professionnel ou lors de loisirs, est devenu un besoin pour une majorité de personnes. Ce besoin s'est fait surtout ressentir depuis le développement de dispositifs de positionnement du type GPS qui ont été mis à la disposition du public. Ces dispositifs publics permettaient de fournir préalablement des données de positionnement à un utilisateur dans une marge de tolérance qui était de ±150m en altitude et de ±100m à l'horizontale, même s'il est connu d'obtenir dans des applications militaires de bien meilleures précisions. Toutefois, cette marge de tolérance a été actuellement réduite par suppression du brouillage sélectif.

Il est à noter que ces imprécisions en X, Y et Z étaient dues, entre autres, en partie au brouillage SA (Selective Availability), c'est-à-dire à une dégradation volontaire produite par le fournisseur du système GPS, et par le passage des ondes radio émises par les satellites à travers la ionosphère produisant un scintillement. Ce passage à travers la ionosphère donne une erreur sur l'altitude de ±50m.

A titre informatif, il faut savoir que chaque satellite émet à intervalle régulier un code spécifique (code de GOLD) définissant sa position précisément. Tous les satellites envoient leur propre code en même temps cadencé chacun par une horloge atomique calibrée. Il se peut néanmoins qu'un léger écart de temps puisse se produire entre l'une et l'autre des horloges, car elles n'ont pas été calibrées en même temps avant la mise en orbite de chaque satellite. Toutefois, ces écarts de temps sont insignifiants en rapport aux erreurs de positions calculées des systèmes GPS mis à la disposition du public.

Tout dispositif récepteur GPS peut recevoir des signaux provenant de satellites en orbite dont la distance au sol peut être entre 20'000 km, lorsqu'un de ces satellites se trouve au Zénith, et 26'000 km, lorsqu'un de ces satellites se trouve en un point de la tangente avec la surface de la Terre.

Pour de plus amples détails sur la détermination d'une position à l'aide de signaux GPS, le lecteur peut se reporter à l'article de M. Pierre-Yves Gillieron publié dans le Flash Informatique n° FI 5 du 9 juin 1998 (Bulletin SSC n°28 de 1998).

La combinaison d'un altimètre avec un récepteur GPS dans un tel dispositif donne l'avantage de fournir des valeurs plus précises en altitude que celles calculées uniquement par le récepteur GPS en fonction des ondes radio qu'il a reçues, pour autant que l'altimètre ait été préalablement calibré à une hauteur connue.

A titre d'exemple et en référence à la figure 1, le document US 5,210,540 décrit un tel dispositif pour la détermination de la position horizontale X , Y et de l'altitude Z. Pour ce faire, le dispositif 1 comprend un récepteur GPS 3 recevant à une antenne 2 des ondes radio 2a émises par plusieurs satellites, un altimètre à capteur de pression 4 calculant une valeur d'altitude en fonction d'une mesure de pression, une unité de traitement 5 recevant des données de position du récepteur GPS 3 et de l'altimètre 4 afin de traiter les données reçues pour pouvoir afficher une position en X, Y et Z sur un moyen d'affichage 9, et des moyens de mémorisation 6 comprenant des données cartographiques. Dans l'unité de traitement 5 est prévu un calibrateur 7 pour pouvoir calibrer la hauteur fournie par l'altimètre afin de pouvoir utiliser cette valeur de référence pour la détermination de position subséquente. Dans ce cas, le récepteur GPS se contente de ne calculer que les données correspondant aux positions X et Y, et donc de passer d'un mode tridimensionnel à un mode bidimensionnel.

Un inconvénient d'un tel dispositif qui est destiné à équiper un véhicule dans le but de donner des informations de navigation réside essentiellement dans le fait qu'il consomme beaucoup d'énergie électrique. Néanmoins, ce dispositif peut tout à fait être alimenté par la batterie du véhicule sans pour autant nuire à sa fourniture d'énergie à d'autres parties électriques du véhicule. Par contre, un tel dispositif ne peut pas être utilisé dans un appareil à faible consommation, tel qu'un téléphone portable ou une montre-bracelet.

Aucune précaution n'est donc prise quant à la consommation électrique du dispositif, ce qui fait qu'il est habituel de doter un tel dispositif de microprocesseurs du type 32-bit par exemple pour pouvoir améliorer les opérations de calcul et réduire le temps de calcul. Il faut savoir que le récepteur GPS doit opérer de multiples itérations pour le calcul des données de positions, par exemple de 10 à 15 itérations. Toutefois, aucun moyen n'est prévu pour faciliter les opérations de calcul des microprocesseurs.

Comme pour l'exemple cité ci-dessus, le document US 5,646,857 , correspondant au préambule de la présente revendication 1, décrit un dispositif portable qui comprend un récepteur de type GPS combiné avec un altimètre notamment à capteur de pression susceptible de fournir des données d'altitude au récepteur GPS afin de calculer des données de position en X, Y et Z. La fourniture d'une valeur de l'altimètre calibré au récepteur permet d'améliorer la précision de la détermination des positions horizontale et verticale tout en tenant compte des facteurs de qualité liés à la valeur fournie par l'altimètre et aux signaux radiofréquences reçus. Cette fourniture de valeur de l'altimètre au récepteur est principalement utile dans le cas où les signaux GPS sont bruyants et incertains, ou dans le cas où le nombre de signaux de satellites reçus est insuffisant. Ce dispositif peut donc fonctionner en mode tridimensionnel ou en mode bidimensionnel à l'aide de l'altimètre.

Toutefois, comme pour le premier exemple, il n'est pas tenu compte de la consommation importante du microcontrôleur qui est en principe du type 32-bit dans les opérations de calcul ce qui est un inconvénient dans le cas où le dispositif est alimenté par une batterie ou un accumulateur à faible consommation. De ce fait, ce dispositif portable ne peut pas équiper une pièce d'horlogerie ou un téléphone portable. De plus, ce n'est que la précision des données de position qui sont importantes dans ce dispositif, mais pas le fait de réduire le temps de calcul ou d'éviter de devoir opérer de multiples itérations dans le cas d'un problème de cycles limites.

Un but que se propose de résoudre l'objet de l'invention consiste en un dispositif pour la détermination des positions horizontale et verticale dans lequel un altimètre à capteur de pression calibré à une hauteur initiale prédéterminée pour la mesure de la hauteur est utilisé pour faciliter les opérations de calcul du récepteur GPS afin de pallier les inconvénients des dispositifs de l'art antérieur. La hauteur de l'altimètre calibré permet donc de fournir une valeur de hauteur précise au récepteur GPS, de réduire le temps de calcul du récepteur et de ce fait la consommation du dispositif.

Un autre but que se propose de résoudre l'objet de l'invention consiste en un procédé de détermination des positions horizontale et verticale pour la mise en action dudit dispositif.

Un autre but que se propose de résoudre l'objet de l'invention consiste en une utilisation du dispositif pour pouvoir évaluer les prévisions météorologiques.

Ces buts, ainsi que d'autres sont atteints à l'aide du dispositif décrit ci-devant qui se caractérise en ce que l'unité de traitement envoie au récepteur GPS un signal correspondant à la valeur de hauteur de l'altimètre calibré pour permettre de diminuer le temps de calcul d'un microcontrôleur à faible consommation du récepteur afin de déterminer, à l'aide de la valeur de hauteur, les données de positions du dispositif.

Ces buts, ainsi que d'autres sont également atteints à l'aide du procédé pour la mise en action du dispositif qui se caractérise en ce qu'il comprend les étapes de calibrer l'altimètre à capteur de pression à une hauteur initiale prédéterminée à l'aide de données traitées et fournies par l'unité de traitement, transmettre une valeur de hauteur de l'altimètre calibré à l'unité de traitement, envoyer un signal correspondant à la valeur de hauteur de l'altimètre calibré de l'unité de traitement vers le récepteur GPS pour permettre de diminuer le temps de calcul d'un microcontrôleur du récepteur afin de déterminer, à l'aide de la valeur de hauteur, les données de positions en fonction des ondes radio reçues de plusieurs satellites, et transmettre les données de positions calculées par le récepteur vers l'unité de traitement afin qu'elles soient traitées et affichées sur des moyens d'affichage.

Enfin, ces buts, ainsi que d'autres sont également atteints grâce à l'utilisation du dispositif pour l'évaluation des conditions météorologiques qui se caractérise en ce que l'altimètre à capteur de pression calibré à une hauteur initiale prédéterminée est agencé pour fournir, à une hauteur équivalente à une hauteur mémorisée dans une période de temps précédente, des variations de pression converties en variations de hauteur transmises à l'unité de traitement pour qu'elle détermine des conditions météorologiques à afficher.

Un avantage du dispositif pour la détermination des positions horizontale et verticale selon l'invention réside en ce qu'il consomme peu d'énergie électrique grâce notamment à la réduction du temps de calcul dans le récepteur GPS avec la donnée d'altitude précise fournie, dans une boucle retour, par l'unité de traitement sur la base de la valeur précise de hauteur provenant de l'altimètre calibré, et à l'emploi de microprocesseurs à faible consommation tels que des microprocesseurs 8-bit.

Si on apporte une valeur de hauteur précise au récepteur par la boucle retour provenant de l'unité de traitement, le récepteur pourra ainsi faire moins d'itérations dans les opérations de calcul pour converger plus rapidement vers les données de positions à fournir à l'unité de traitement.

Etant donné l'emploi de tels microprocesseurs 8-bit, il se peut qu'en l'absence de la fourniture de la valeur précise de hauteur provenant de l'altimètre, les multiples itérations des opérations de calcul conduisent en une détermination imprécise des positions horizontale et verticale. Cette imprécision provient du phénomène des « cycles limites » où le dispositif converge vers une valeur fausse par exemple dans le cas où une impulsion d'horloge lors du calcul a été perdue. Ce phénomène est bien connu dans le domaine de l'électronique.

L'erreur de calcul fournit un résultat erroné qui peut être bien supérieur à l'imprécision inhérente aux dispositifs récepteurs GPS, par exemple une erreur supérieure à ±150m pour une position verticale. En facilitant les opérations de calcul du récepteur par l'apport de la valeur précise de hauteur, une convergence plus rapide vers la solution permet donc d'éviter ce phénomène des cycles limites.

La faible consommation d'énergie électrique permet ainsi d'envisager une intégration de tous les éléments du dispositif, alimentés par une batterie ou un accumulateur pour courants faibles, dans une pièce d'horlogerie, telle qu'une montre-bracelet, ou même dans un appareil de petite taille, tel que par exemple un téléphone portable.

Un autre avantage du dispositif selon l'invention consiste en ce qu'il peut être utilisé pour donner des conditions météorologiques grâce à l'altimètre à capteur de pression. Comme on connaît précisément la hauteur du lieu de départ fournie par des données de la mémoire ou par des valeurs de hauteur enregistrées provenant de l'altimètre précédemment calibré, les variations du capteur de l'altimètre sert à définir les conditions météorologiques pour la journée. Si l'altimètre indique +50m par exemple, cela signifie une basse pression, par contre s'il indique -50m, cela signifie une haute pression. Bien entendu après que cette information ait été affichée sur les moyens d'affichage, le capteur de l'altimètre nécessite d'être à nouveau calibré à une hauteur prédéterminée précise pour servir, comme précédemment décrit, aux opérations de calcul du récepteur.

Les buts, avantages et caractéristiques du dispositif et du procédé pour la détermination des positions horizontale et verticale apparaîtront mieux dans la description suivante de formes d'exécution illustrées par les dessins sur lesquels :

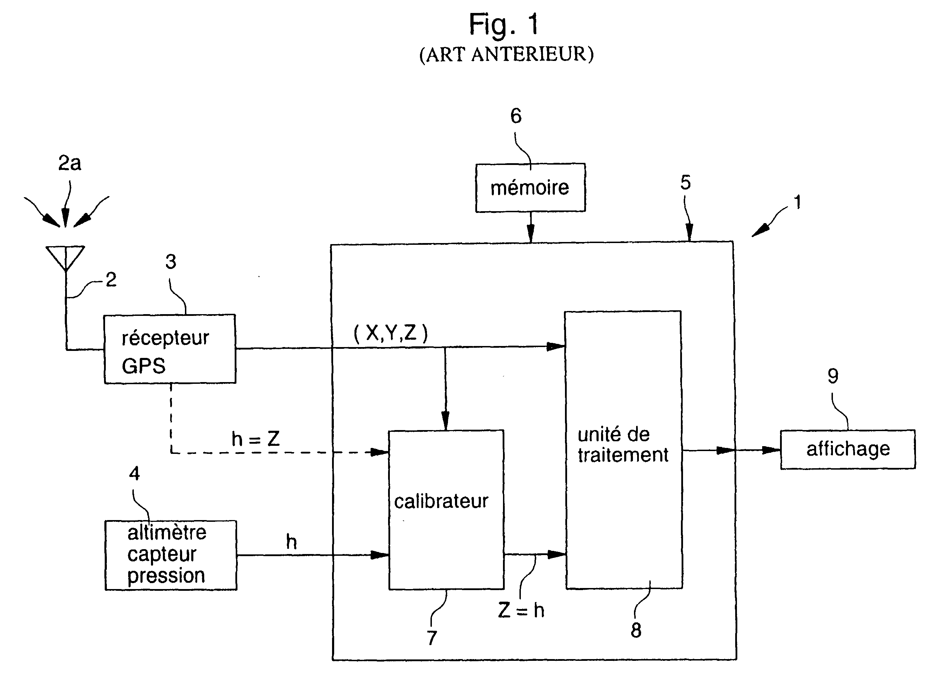

- la figure 1 représente un dispositif pour la détermination des positions horizontale et verticale décrit ci-dessus selon l'art antérieur,
- la figure 2 représente schématiquement un dispositif portable pour la détermination des positions horizontale et verticale selon l'invention,
- la figure 3 représente de manière plus détaillée le récepteur GPS et la mémoire qui lui est associée du dispositif de la figure 2, et
- la figure 4 représente de manière plus détaillée l'unité de traitement du dispositif de la figure 2.

La description suivante ne décrira pas en détail tous les composants ou blocs électroniques que comportent les diverses parties dudit dispositif qui sont connus de l'homme de l'art dans ce domaine de l'électronique, mais, par contre, mentionnera schématiquement lesdits composants nécessaires à l'élaboration d'une forme d'exécution préférée du dispositif objet de l'invention, ainsi que du procédé de mise en action dudit dispositif.

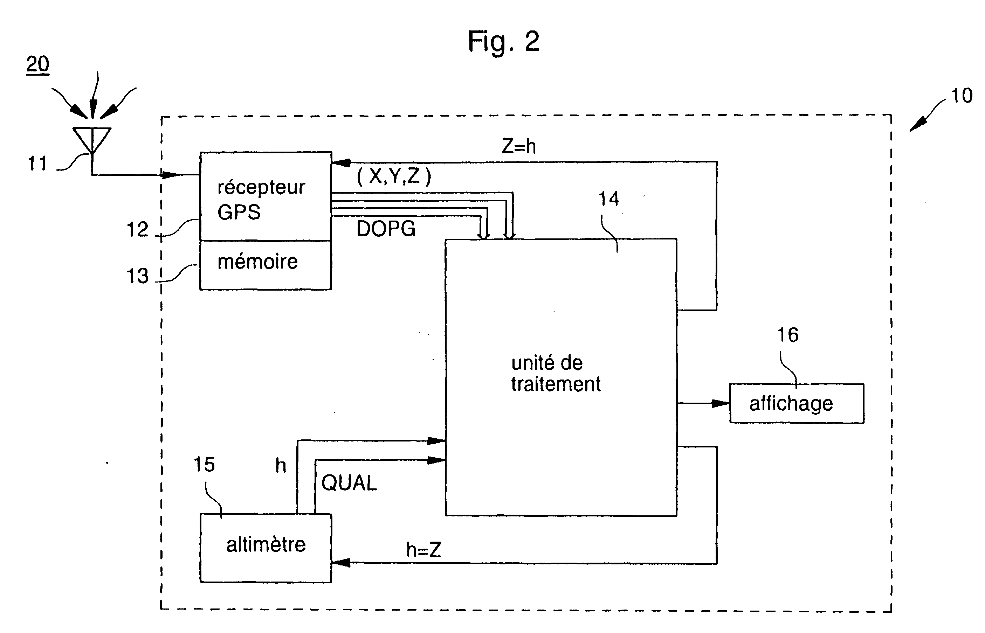

La figure 2 représente schématiquement le dispositif portable 10 pour la détermination des positions horizontale et verticale, c'est-à-dire selon les axes X, Y et Z. Les positions horizontales sont définies en général par la longitude et la latitude, et la position verticale est définie par la hauteur par rapport au niveau de la mer.

Le dispositif portable peut être incorporé aussi bien dans une montre-bracelet à garde-temps électronique, dans un téléphone ou dans un autre appareil électronique à la taille humaine qui soit facile à transporter. Dans cette intégration, le dispositif est alimenté par une batterie ou un accumulateur pour courants faibles de la montre, du téléphone ou de l'appareil.

Le dispositif comprend un récepteur GPS 12 qui reçoit à une antenne 11 des ondes radio provenant de plusieurs satellites 20, des moyens de mémorisation 13 de données cartographiques associés dans ce cas de figure au récepteur GPS 12, un altimètre à capteur de pression 15 destiné à mesurer des variations de pression converties en une valeur de hauteur, une unité de traitement 14 recevant des informations à traiter du récepteur et de l'altimètre, et des moyens d'affichage 16 pour afficher au moins les positions horizontale et verticale traitées par l'unité de traitement.

Dans le cas où le dispositif 10 est incorporé dans une montre-bracelet à affichage analogique ou digital, tous les composants cités ci-dessus sont en principe fixés sur un support commun qui est un circuit imprimé avec des pistes métalliques reliant chaque composant réalisées sur une ou deux faces d'un substrat isolant et connectant la pile pour l'alimentation électrique. Le support portant tous les composants est logé dans le boîtier de la montre laissant au moins une ouverture vers l'extérieur pour la mesure de la pression par le capteur de l'altimètre.

Trois satellites suffisent à déterminer précisément les positions horizontale et verticale du dispositif pour autant que l'horloge du récepteur 12 soit synchronisée à celle des horloges atomiques desdits satellites. Dans le cas contraire, il est nécessaire que le récepteur soit branché sur au moins quatre satellites, le quatrième permettant la mise à jour de la base de temps du récepteur, c'est-à-dire la synchronisation de son horloge interne.

Cela conduit à une résolution par exemple de quatre équations à quatre inconnues (X, Y, Z ; t) avec les signaux reçus des quatre satellites.

La détermination de la position est relative à la détermination des intervalles de temps entre les signaux radio reçus par le récepteur de chacun des quatre satellites questionnés qui ont émis en même temps chacun leur message spécifique avec leurs éphémérides (code de GOLD). Le temps de réception de chaque signal radio détermine donc la distance du point de réception au satellite correspondant puisque le code reçu de chacun des satellites contient les informations sur sa position en orbite.

A titre indicatif, le temps mis par le signal du satellite au récepteur multiplié par la vitesse de la lumière donne la distance qui sépare le récepteur du satellite, ce qui permet à l'aide des quatre satellites de déduire la position du dispositif par rapport aux dits satellites.

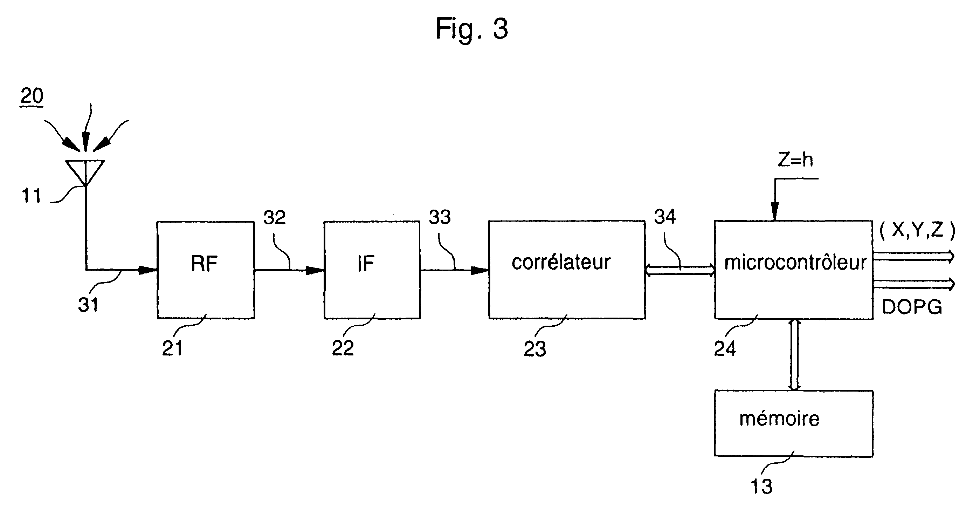

Dans une première phase, l'altimètre 15 du dispositif 10 doit être calibré précisément à une hauteur prédéterminée h afin de pouvoir se baser sur la valeur de hauteur précise donnée par l'altimètre notamment pour les opérations de calcul du récepteur lors d'une utilisation du dispositif comme il sera expliqué de manière plus détaillée ci-dessous en référence à la figure 3.

Le capteur de pression utilisé dans l'altimètre 15 peut être un capteur piézo-résistif de type connu réalisé sur un élément en silicium micro-usiné ayant une membrane dont une face est exposée à la pression ambiante et l'autre face porte des résistances disposées en pont de Wheatstone. Toute variation de pression crée un déséquilibre du pont donnant une variation de tension entre des bornes de sortie dudit pont. Le capteur peut être du type AM761 qui est commercialisé par la société Intersema Sensoric à Bevaix en Suisse.

Au moment du départ à une randonnée, l'altimètre à capteur de pression est donc calibré à une hauteur prédéterminée qui provient habituellement du récepteur GPS 12 en association à des données cartographiques précises d'une région d'utilisation du dispositif enregistrées par exemple dans une mémoire 13. La hauteur précise connue de l'endroit de départ tirée par exemple de la mémoire 13 est amenée à l'unité de traitement 14 qui la renvoie à l'altimètre à capteur de pression 15 pour une opération de calibrage.

Une comparaison est normalement effectuée entre les données de positions calculées par le récepteur GPS et les données précises de plusieurs points de référence d'une carte géographique enregistrées dans ladite mémoire. Si la position horizontale (X, Y) ou les positions horizontale et verticale (X, Y, Z) correspondent à une donnée précise enregistrée, alors au moins la valeur précise de la hauteur tirée de la mémoire est transmise à l'unité pour le calibrage de l'altimètre.

La mémoire 13 utilisée en association avec le récepteur GPS 12 est par exemple une mémoire EEPROM. Dans cette mémoire, il est possible de programmer par voie électrique des données cartographiques d'une région déterminée afin d'avoir dans ladite mémoire des valeurs précises en X, Y et Z d'un endroit de départ ou lors d'une escapade, ou également des courbes de niveaux. Habituellement, c'est la donnée en Z qui est communiquée à l'unité de traitement 14 par le récepteur 12 d'un endroit précis.

Il peut être envisagé au lieu d'avoir la mémoire fixée sur le support commun à tous les autres composants du dispositif, de prévoir une mémoire sous forme modulaire dédicacé d'une région spécifique. Le changement de région imposerait donc de changer de module mémoire.

Bien entendu, le calibrage de l'altimètre à une hauteur prédéterminée peut aussi être effectué de toute autre manière que celle décrite ci-dessus, par exemple en introduisant la valeur de hauteur à l'aide d'un clavier ou par télédéchargement directement dans l'unité de traitement.

Une fois calibré, l'altimètre 15 est destiné à faire des mesures de pression converties en données de hauteur relatives à la hauteur prédéterminée suite au calibrage lors de la randonnée et en fonction des conditions météorologiques, c'est-à-dire pendant une période, par exemple de 5 à 6 heures, où lesdites conditions ne varient pas trop. A titre indicatif, pour une variation de 10 hectopascals en changement de pression cela correspond à une différence d'altitude de 100m.

La valeur précise de hauteur h de l'altimètre 15 calibré est transmise à l'unité de traitement 14 qui envoie un signal correspondant à cette valeur de hauteur précise au récepteur GPS 12 afin de lui faciliter les opérations de calcul des données horizontales et verticale comme expliqué ci-dessus. La prise en compte de la hauteur de l'altimètre 15 permet donc de diminuer les itérations du récepteur pour le calcul des valeurs de position X , Y (longitude et latitude) et Z.

Après calibrage du capteur de l'altimètre 15, le dispositif 10 pourra fournir sur les moyens d'affichage et sur demande, par exemple en pressant sur un bouton de commande dédicacé du dispositif, ou de manière automatique à intervalles réguliers, la valeur de l'altitude Z, ou h de l'altimètre, et de la position en X et Y (longitude et latitude) par les données du récepteur 12 fournies à l'unité de traitement 14.

Comme on peut le remarquer sur la figure 2, les signaux transmis à l'unité de traitement 14 provenant du récepteur GPS 12 et de l'altimètre 15 comprennent également des paramètres ou facteur de qualité des données transmises.

Depuis le récepteur 12, des paramètres de qualité dénommé DOPG définissant une réduction de précision généralisée sont transmises en même temps que les données de positions (X, Y, Z). Ces paramètres sont tirés également des signaux reçus des satellites 20 où ils peuvent être décomposés par exemple en HDOP pour la position horizontale et en VDOP pour la position verticale. Ces paramètres permettent à l'unité de traitement de savoir quelle est la précision des données de position calculées par le récepteur. Au cas où ce facteur vaut 20, cela signifie que la précision est mauvaise, par contre si ce facteur s'approche de 1, cela signifie que la précision est bonne. L'unité de traitement transmet cette donnée supplémentaire à afficher sur les moyens d'affichage 16 pour avertir l'utilisateur du dispositif de la qualité de la mesure effectuée.

Depuis l'altimètre 15, le facteur de qualité QUAL est transmis en même temps que la valeur de hauteur h à l'unité de traitement. Ce facteur peut être par exemple représentatif de la précision de la hauteur fournie par l'altimètre en fonction du temps qui s'écoule depuis le précédent calibrage du capteur de pression dudit altimètre 15. Il a une valeur de 1 juste après le calibrage et décroît de manière quasi linéaire en fonction du temps qui s'écoule dans une période de 5 à 6 heures comme indiqué ci-dessus.

Dans l'unité de traitement, une comparaison est effectuée entre les paramètres de qualité DOPG et le facteur QUAL. Suite à cette comparaison, si le facteur QUAL est inférieur au paramètre de hauteur des paramètres DOPG, l'unité de traitement peut décider de la nécessité de recalibrer le capteur pour qu'il puisse fournir par la suite une valeur de hauteur basée sur une nouvelle hauteur prédéterminée au récepteur GPS pour toutes les opérations de calcul subséquente de la position.

Il est à noter encore que la précision à l'horizontale restera toujours à ±100m même si la hauteur est très précise. Néanmoins, grâce à la boucle retour de la valeur de la hauteur provenant du capteur, le temps des opérations de calcul du récepteur est fortement réduit, d'où une consommation limitée du récepteur.

A tout moment, lors d'une randonnée, des positions X, Y calculées par le récepteur GPS 12, ainsi que la valeur précise de hauteur peuvent être enregistrées dans la mémoire 13 afin d'augmenter le nombre de points de référence de lieux géographiques répertoriés.

Le dispositif 10 peut être également utilisé pour évaluer des prévisions météorologiques. A une même altitude connue et enregistrée, toute variation en pression du capteur de pression de l'altimètre 15 par rapport à une valeur de pression d'un précédent calibrage peut refléter les tendances barométriques. L'unité de traitement, dans ce cas, va prendre la valeur de hauteur transmise par l'altimètre et la comparer par rapport à une précédente valeur enregistrée à une même altitude.

Si la variation de la valeur de hauteur de l'altimètre est positive, cela signifie une tendance à une basse pression. Si la variation de la valeur de hauteur de l'altimètre est négative, par contre, cela signifie une tendance à une haute pression.

Cette information traitée par l'unité de traitement peut être affichée par le dispositif pour donner une indication sur les conditions météorologiques à son utilisateur avant de partir pour une randonnée et avant de devoir à nouveau calibrer l'altimètre à une hauteur précise mémorisée. A titre informatif, on peut se reporter à la demande de brevet européenne EP 0 670 532 de la demanderesse décrivant une montre météo.

Une variation climatique se mesure entre 0,6 à 1,6 mbar/h entre une faible et une forte perturbation climatique, tandis que la mesure d'une variation en altitude est de l'ordre de 30 mbar/h pour une hauteur de 300 m ce qui peut être bien supérieur à la variation climatique lors d'une randonnée. Une fois calibré et pendant une longue période de la journée, la hauteur donnée par l'altimètre peut être considérée comme précise même avec une faible influence de la variation climatique. Par contre au delà d'une journée et avant une autre randonnée, les variations climatiques peuvent être contrôlées par l'unité pour la prévision météorologique du jour à venir.

La figure 3 représente de manière plus détaillée les blocs électroniques du récepteur GPS associé à des moyens de mémorisation, tels qu'une mémoire EEPROM 13 décrite précédemment en référence à la figure 2.

Ledit récepteur comprend une antenne 11 pour recevoir les signaux radio à fréquence porteuse de 1,57542 GHz provenant de plusieurs satellites 20, un premier circuit de conversion radio-fréquence 21 recevant les signaux 31 de l'antenne 11 pour opérer une démultiplication de la fréquence des signaux 31 pour fournir des signaux 32 à une fréquence de l'ordre de 180 MHz, un second circuit de conversion 22 recevant les signaux 32 pour opérer une démultiplication de la fréquence des signaux 32 pour fournir des signaux 33 à une fréquence de l'ordre de 4 MHz, un corrélateur 23 recevant les signaux 33 et comprenant une série d'étage de démultiplication pour pouvoir tirer des signaux radio reçus à l'antenne les codes spécifiques de chaque satellite, un microcontrôleur 8-bit 24 en communication avec le corrélateur 23 par les lignes 34 pour recevoir les informations dudit corrélateur et lui imposer des commandes.

Les données transmises par les lignes 34 du corrélateur 23 au microcontrôleur 24 sont normalement à une fréquence de 50 Hz, alors que le microcontrôleur fonctionne avec un signal d'horloge de l'ordre de 8 MHz et permet également la synchronisation du corrélateur 23. Comme décrit ci-devant, cette base de temps doit être synchronisée à la base de temps des satellites.

Comme le premier circuit de conversion radio-fréquence 21 consomme plus d'énergie électrique que les autres composants dudit récepteur, il n'est enclenché que pour la réception de chaque signal radio et la transmission au second circuit de conversion.

Chaque code spécifique des satellites modulé sur la fréquence porteuse de 1,57542 GHz s'appelle code de Gold. Ce code est un code à une fréquence de 1,023 MHz (1023 bits) qui se répète toutes les millisecondes (1ms).

A la réception du signal GPS, en plus du signal utile, un bruit d'amplitude beaucoup plus importante (+20dB) surpasse le signal qu'on souhaite tiré des signaux GPS. Il est donc nécessaire de connaître quelle doit être la forme du signal à la réception pour pouvoir corréler dans le corrélateur 23 le signal reçu avec un signal utile connu et dès qu'une équivalence apparaît on sait quel est le signal propre du satellite en ayant éliminé ou filtré le bruit. Le signal connu est mémorisé dans le microcontrôleur 24 qui l'envoie au corrélateur 23 pour trouver cette équivalence.

Le microcontrôleur 24 commande également le corrélateur 23 pour lui imposer de se brancher selon tel canal sur tel ou tel satellite dans la mesure où une communication peut avoir lieu. Si un satellite sur demande du microcontrôleur ne peut être atteint dans un laps de temps le microcontrôleur 24 donne un autre ordre au corrélateur 23 pour pouvoir se brancher sur un autre des satellites à disposition. Plus le nombre de satellites questionné est grand, plus la précision est grande, mais quatre satellites au moins sont indispensables.

Le microcontrôleur 24 reçoit la valeur de hauteur précise Z=h de l'unité de traitement afin de faciliter les opérations de calcul du récepteur et donc converger plus rapidement vers la solution. Après la détermination des positions horizontale et verticale, une comparaison est effectuée avec les données enregistrées dans la mémoire afin de détecter si les données précises enregistrées correspondent à celles calculées par le récepteur. Les données de positions (X, Y, Z), ainsi que les paramètres de qualité DOPG sont transmis à l'unité de traitement pour être traités et affichés sur les moyens d'affichage.

Le microcontrôleur 8-bit peut être celui commercialisé sous la dénomination CooIRISC-816 de EM Microelectronic-Marin SA en Suisse.

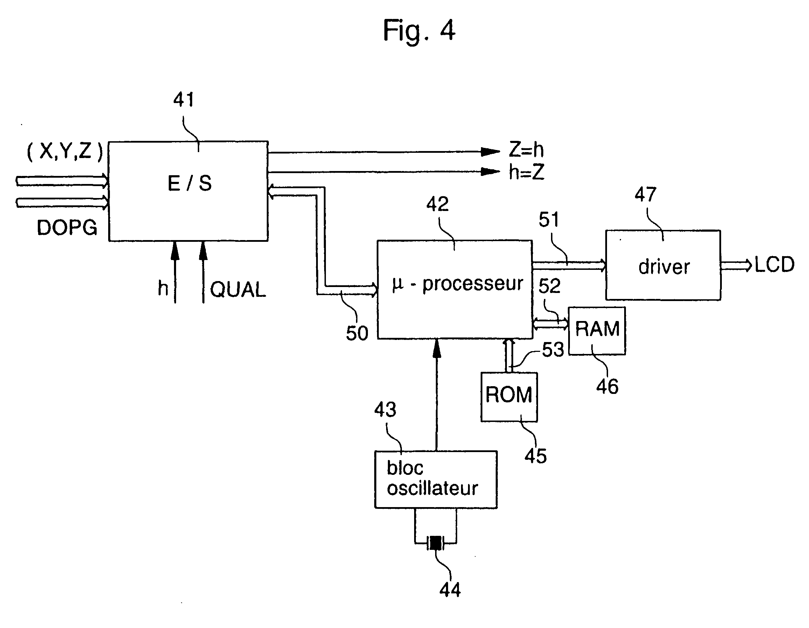

En référence à la figure 4, l'unité de traitement pour la gestion des données reçues du récepteur et de l'altimètre qui comprend un microcontrôleur 8-bit est présentée de manière plus détaillée. Elle comprend un bloc d'entrées et de sorties 41 recevant les données du récepteur et de l'altimètre et fournissant en sortie des données d'une part h=Z pour l'altimètre et d'autre part Z=h pour le récepteur, un microprocesseur 42 cadencé à une fréquence de 32 kHz par un bloc oscillateur 43 à quartz 44 et en communication par les lignes 50 avec le bloc 41, une mémoire à programme ROM 45 reliée par des lignes 53 au microprocesseur 42, une mémoire RAM 46 de stockage de données en communication par des lignes 52 avec le microprocesseur 42, un circuit d'entraînement 47 des moyens d'affichage, tels qu'un affichage à cristaux liquides, recevant des informations par les lignes 51 du microprocesseur 42.

Le bloc d'entrées et de sorties 41 reçoit les données de positions (X, Y, Z) du récepteur GPS, les paramètres de qualité DOPG des données de positions, la valeur de hauteur h de l'altimètre et le facteur de qualité QUAL de l'altimètre. Dans ce bloc commandé par le microprocesseur 42, il peut être prévu un circuit de comparaison notamment entre les paramètres de qualité DOPG et le facteur de qualité QUAL comme décrit ci-devant.

Dans la mémoire RAM 46, il peut être stocké par exemple des valeurs de hauteur reçues de l'altimètre calibré ou du récepteur pour pouvoir servir également aux prévisions météorologiques à afficher.

Le microprocesseur est avantageusement un microprocesseur PUNCH 8-bit fournis par EM Microelectronic-Marin SA en Suisse.

Au cas où le dispositif est incorporé dans une pièce d'horlogerie, le bloc oscillateur 43 avec le cristal 44 sert également comme base de temps pour les fonctions horlogères.

A partir de la description qui vient d'être faite de multiples variantes de réalisation peuvent être conçues sans sortir du cadre de l'invention à la connaissance de l'homme du métier. Par exemple, au lieu de relier la mémoire qui comprend les données cartographiques au récepteur, il peut être envisageable de la relier à l'unité de traitement. Dans ces conditions, la comparaison avec les données de positions calculées par le récepteur se fera dans l'unité de traitement et non plus dans le récepteur.

## Revendications

1. Dispositif portable pour la détermination des positions horizontale et verticale, ledit dispositif comprenant un altimètre (15) à capteur de pression calibré à une hauteur initiale prédéterminée, un récepteur de signaux GPS (12) agencé pour recevoir des signaux provenant de plusieurs satellites (20) afin de calculer des données de positions du dispositif (10), une unité de traitement (14) recevant les données de positions du récepteur (12) et une valeur de hauteur de l'altimètre (15) basée sur des mesures de pression du capteur de pression par rapport à la hauteur prédéterminée, et des moyens d'affichage (16) des positions horizontale et verticale du dispositif traitées et fournies par l'unité de traitement, ledit dispositif étant alimenté par une batterie ou un accumulateur, **caractérisé en ce que** l'unité de traitement (14) envoie dans un microcontrôleur (24) du récepteur GPS (12) un signal (Z=h) correspondant à la valeur de hauteur de l'altimètre (15) calibré pour permettre de diminuer le temps de calcul du microcontrôleur (24) du récepteur (12) en réduisant le nombre d'itérations des opérations de calcul des données de positions du dispositif.

2. Dispositif selon la revendication 1, **caractérisé en ce que** des moyens de mémorisation (13) comprenant des données cartographiques d'une région sont associés-au récepteur GPS (12) pour lui permettre de fournir à l'unité de traitement (14) des données de positions précises au cas où la position calculée par ledit récepteur correspond à un point géographique enregistré dans lesdits moyens de mémorisation.

3. Dispositif selon la revendication 2, **caractérisé en ce que** les moyens de mémorisation (13) sont une mémoire non volatile du type EEPROM dans laquelle les données cartographiques sont introduites et effacées électriquement.

4. Dispositif selon l'une des revendications 2 et 3, **caractérisé en ce que** les moyens de mémorisation (13) comprenant les données cartographiques d'une région sont incorporés dans un module détachable dudit dispositif afin de pouvoir changer ledit module en fonction d'une région géographique déterminée d'utilisation dudit dispositif.

5. Dispositif selon la revendication 1, **caractérisé en ce que** le récepteur (12) et l'unité de traitement (14) comprennent chacun un microcontrôleur (24, 42) à faible consommation, notamment un microcontrôleur 8-bit.

6. Dispositif selon la revendication 1, **caractérisé en ce que** les opérations dans le récepteur sont cadencées à des fréquences d'horloge supérieures au MHz, alors que les opérations dans l'unité de traitement sont cadencées à des fréquences d'horloge inférieures à 100 kHz.

7. Dispositif selon l'une des revendications 1 et 2, **caractérisé en ce que** le récepteur (12), l'altimètre (15), l'unité de traitement (14) et les moyens de mémorisation (13) sont fixés sur un même support.

8. Dispositif selon l'une des revendications précédentes, **caractérisé en ce qu'**il est incorporé dans une pièce d'horlogerie, notamment une montre-bracelet, ou dans un téléphone portable.

9. Dispositif selon la revendication 1, **caractérisé en ce que** le récepteur (12) est agencé pour envoyer à l'unité de traitement (14), en plus des données de position (X, Y, Z), des paramètres de qualité (DOPG) tirés des ondes radio émises par les satellites (20) pour que l'unité de traitement (14) puisse déterminer la précision des données de positions reçues du récepteur.

10. Procédé pour la détermination des positions horizontale et verticale pour la mise en action du dispositif selon l'une des revendications précédentes, **caractérisé en ce qu'**il comprend les étapes de :
- calibrer l'altimètre (15) à capteur de pression à une hauteur initiale prédéterminée à l'aide de données traitées et fournies par l'unité de traitement (14),
- transmettre une valeur de hauteur de l'altimètre (15) calibré à l'unité de traitement (14),
- envoyer un signal (Z=h) correspondant à la valeur de hauteur de l'altimètre (15) calibré de l'unité de traitement (14) dans un microcontrôleur (24) de récepteur GPS (12) pour permettre de diminuer le temps de calcul du microcontrôleur (24) du récepteur en réduisant le nombre d'itérations des opérations de calcul des données de positions en fonction des ondes radio reçues de plusieurs satellites (20), et
- transmettre les données de positions calculées par le récepteur (12) vers l'unité de traitement (14) afin qu'elles soient traitées et affichées sur des mayens d'affichage (16).

11. Procédé selon la revendication 10, **caractérisé en ce que** les données pour le calibrage de l'attimètre (15) à une hauteur précise prédéterminée sont tirées de moyens de mémorisation (13) comprenant des données cartographiques d'une région et associés au récepteur GPS (12) pour la transmission à l'unité de traitement (14).

12. Procédé selon la revendication 10, **caractérisé en ce qu'**en plus des données de positions, le récepteur (12) transmet des paramètres de qualité (DOPG) tirés des ondes radio reçues des satellites (20) pour que l'unité de traitement (14) puisse déterminer la précision des données de positions reçues du récepteur.

13. Procédé selon la revendication 12, **caractérisé en ce qu'**en plus de la valeur de hauteur, l'altimètre (15) transmet à l'unité de traitement (14) un facteur de qualité (QUAL) de ladite valeur de hauteur, et **en ce qu'**une comparaison entre les paramètres de qualité (DOPG) du récepteur et le facteur de qualité (QUAL) de l'altimètre est opérée dans l'unité afin de déterminer les positions horizontale et verticale précises à afficher.

14. Procédé selon la revendication 13, **caractérisé en ce que** l'altimètre (15) est à nouveau calibré à une hauteur prédéterminée si le résultat de la comparaison montre que les paramètres de qualité (DOPG) provenant du récepteur sont meilleurs que le facteur de qualité (QUAL) provenant de l'altimètre.

15. Procédé selon la revendication 10, **caractérisé en ce qu'**en un même lieu à hauteur mémorisée, les variations de pression du capteur de l'altimètre (15) converties en variations de hauteur servent à déterminer dans l'unité de traitement (14) des conditions météorologiques à afficher, l'altimètre étant calibré par la suite à la hauteur mémorisée.

16. Utilisation du dispositif selon la revendication 1 pour l'évaluation de conditions météorologiques, **caractérisé en ce que** l'altimètre (15) à capteur de pression calibré à une hauteur initiale prédéterminée est agencé pour fournir, à une hauteur équivalente à une hauteur mémorisée dans une période de temps précédente, des variations de pression converties en variations de hauteur transmises à l'unité de traitement (14) pour qu'elle détermine des conditions météorologiques à afficher.

## Patentansprüche

1. Tragbare Vorrichtung für die Bestimmung horizontaler und vertikaler Positionen, wobei die Vorrichtung einen Höhenmesser (15) mit Drucksensor, der auf eine vorgegebene Anfangshöhe geeicht ist, einen GPS-Signalempfänger (12), der so beschaffen ist, dass er Signale empfängt, die von mehreren Satelliten (20) ankommen, um Positionsdaten der Vorrichtung (10) zu berechnen, eine Verarbeitungseinheit (14), die die Positionsdaten vom Empfänger (12) und einen Höhenwert des Höhenmessers (15), der auf Druckmessungen des Drucksensors in Bezug auf die vorgegebene Höhe basiert, empfängt, und Anzeigemittel (16) für die horizontale und vertikale Position der Vorrichtung, die von der Verarbeitungseinheit verarbeitet und geliefert werden, wobei die Vorrichtung durch eine Batterie oder einen Akkumulator versorgt wird, **dadurch gekennzeichnet, dass** die Verarbeitungseinheit (14) an einen Mikrocontroller (24) des GPS-Empfängers (12) ein Signal (Z = h) schickt, das dem Höhenwert des geeichten Höhenmessers (15) entspricht, um die Rechenzeit des Mikrocontrollers (24) des Empfängers (12) zu verringern, indem die Anzahl von Iterationen der Rechenoperationen der Positionsdaten der Vorrichtung verringert wird.

2. Vorrichtung nach Anspruch 1, **dadurch gekennzeichnet, dass** dem GPS-Empfänger (12) Speichermittel (13), die kartographische Daten eines Gebietes enthalten, zugeordnet sind, um ihm zu ermöglichen, an die Verarbeitungseinheit (14) in dem Fall, in dem die durch den Empfänger berechnete Position einem in dem Speichermitteln aufgezeichneten geographischen Punkt entspricht, präzise Positionsdaten zu liefern.

3. Vorrichtung nach Anspruch 2, **dadurch gekennzeichnet, dass** die Speichermittel (13) ein nichtflüchtiger Speicher des EEPROM-Typs sind, in den die kartographischen Daten elektrisch eingegeben und aus dem sie elektrisch gelöscht werden.

4. Vorrichtung nach einem der Ansprüche 2 und 3, **dadurch gekennzeichnet, dass** die Speichermittel (13), die kartographische Daten eines Gebietes enthalten, in ein Modul eingebaut sind, das von der Vorrichtung abnehmbar ist, um das Modul in Abhängigkeit von einem bestimmten geographischen Gebiet, in dem die Vorrichtung verwendet wird, wechseln zu können.

5. Vorrichtung nach Anspruch 1, **dadurch gekennzeichnet, dass** der Empfänger (12) und die Verarbeitungseinheit (14) jeweils einen Mikrocontroller (24, 42) mit geringem Verbrauch, insbesondere einen 8-Bit-Mikrocontroller, enthalten.

6. Vorrichtung nach Anspruch 1, **dadurch gekennzeichnet, dass** die Operationen in dem Empfänger mit Taktfrequenzen oberhalb von MHz getaktet werden, während die Operationen in der Verarbeitungseinheit mit Taktfrequenzen unterhalb von 100 kHz getaktet werden.

7. Vorrichtung nach einem der Ansprüche 1 und 2, **dadurch gekennzeichnet, dass** der Empfänger (12), der Höhenmesser (15), die Verarbeitungseinheit (14) und die Speichermittel (13) auf demselben Träger befestigt sind.

8. Vorrichtung nach einem der vorhergehenden Ansprüche, **dadurch gekennzeichnet, dass** sie in ein Zeitmessgerät, insbesondere eine Armbanduhr, oder in ein tragbares Telephon eingebaut ist.

9. Vorrichtung nach Anspruch 1, **dadurch gekennzeichnet, dass** der Empfänger (12) so beschaffen ist, dass er an die Verarbeitungseinheit (14) zusätzlich zu den Positionsdaten (X, Y, Z) Qualitätsparameter (DOPG), die aus Funkwellen gewonnen werden, die von Satelliten (20) gesendet werden, schickt, damit die Verarbeitungseinheit (14) die Genauigkeit der vom Empfänger empfangenen Positionsdaten bestimmen kann.

10. Verfahren für die Bestimmung horizontaler und der vertikaler Positionen, um die Vorrichtung nach einem der vorhergehenden Ansprüche zu betreiben, **dadurch gekennzeichnet, dass** es die folgenden Schritte umfasst:
- Eichen des Höhenmessers (15) mit Drucksensor auf eine vorgegebene Anfangshöhe mit Hilfe von Daten, die von der Verarbeitungseinheit (14) verarbeitet und geliefert werden,
- Senden eines Höhenwertes des geeichten Höhenmessers (15) an die Verarbeitungseinheit (14),
- Schicken eines Signals (Z = h), das dem Höhenwert des geeichten Höhenmessers (15) der Verarbeitungseinheit (14) entspricht, an einen Mikrocontroller (24) des GPS-Empfängers (12), um eine Verringerung der Rechenzeit des Mikrocontrollers (24) des Empfängers zu ermöglichen, indem die Anzahl der Iterationen der Rechenoperationen für die Positionsdaten in Abhängigkeit von den empfangenen Funkwellen mehrerer Satelliten (20) verringert wird, und
- Senden der berechneten Positionsdaten durch den Empfänger (12) zu der Verarbeitungseinheit (14), damit sie verarbeitet und in den Anzeigemitteln (16) angezeigt werden.

11. Verfahren nach Anspruch 10, **dadurch gekennzeichnet, dass** die Daten für die Eichung des Höhenmessers (15) auf eine vorgegebene präzise Höhe aus Speichermitteln (13) erhalten werden, die kartographische Daten eines Gebietes enthalten und dem GPS-Empfänger (12) zugeordnet sind, um sie an die Verarbeitungseinheit (14) zu übertragen.

12. Verfahren nach Anspruch 10, **dadurch gekennzeichnet, dass** der Empfänger (12) zusätzlich zu den Positionsdaten Qualitätsparameter (DOPG) sendet, die aus von Satelliten (20) empfangenen Funkwellen entnommen werden, damit die Verarbeitungseinheit (14) die Genauigkeit der vom Empfänger empfangenen Positionsdaten bestimmen kann.

13. Verfahren nach Anspruch 12, **dadurch gekennzeichnet, dass** der Höhenmesser (15) zusätzlich zu dem Höhenwert an die Verarbeitungseinheit (14) einen Qualitätsfaktor (QUAL) des Höhenwertes sendet und dass in der Einheit ein Vergleich zwischen den Qualitätsparametern (DOPG) des Empfängers und dem Qualitätsfaktor (QUAL) des Höhenmessers ausgeführt wird, um die anzuzeigenden präzisen horizontalen und vertikalen Positionen zu bestimmen.

14. Verfahren nach Anspruch 13, **dadurch gekennzeichnet, dass** der Höhenmesser erneut auf eine vorgegebene Höhe geeicht wird, falls das Ergebnis des Vergleichs zeigt, dass die vom Empfänger stammenden Qualitätsparameter (DOPG) besser als der vom Höhenmesser stammende Qualitätsfaktor (QUAL) sind.

15. Verfahren nach Anspruch 10, **dadurch gekennzeichnet, dass** am selben Ort mit gespeicherter Höhe die in Höhenänderungen umgewandelten Druckänderungen des Sensors des Höhenmessers (15) dazu dienen, in der Verarbeitungseinheit (14) anzuzeigende meteorologische Bedingungen zu bestimmen, wobei der Höhenmesser anschließend auf die gespeicherte Höhe geeicht wird.

16. Verwendung der Vorrichtung nach Anspruch 1 für die Bewertung meteorologischer Bedingungen, **dadurch gekennzeichnet, dass** der Höhenmesser (15) mit Drucksensor, der auf eine vorgegebene Anfangshöhe geeicht ist, so beschaffen ist, dass er auf einer Höhe, die zu einer in einer vorhergehenden Zeitdauer gespeicherten Höhe äquivalent ist, Druckänderungen, die in übertragene Höhenänderungen umgewandelt sind, an die Verarbeitungseinheit (14) liefert, damit sie anzuzeigende meteorologische Bedingungen bestimmt.

## Claims

1. Portable device for determining horizontal and vertical positions, said device including a pressure sensor altimeter (15) calibrated to a predetermined initial altitude, a GPS signal receiver (12) arranged to receive signals originating from several satellites (20) in order to calculate position data of the device (10), a processing unit (14) receiving the position data from the receiver (12) and an altitude value from the altimeter (15) based on pressure measurements of the pressure sensor with respect to the predetermined altitude, and display means (16) for the horizontal and vertical positions of the device processed and provided by the processing unit, said device being powered by a low power consuming battery or accumulator, **characterised in that** the processing unit (14) sends, to a microcontroller (24) of the GPS receiver (12) a signal (Z=h) corresponding to the altitude value of the calibrated altimeter (15) to enable the calculating time of the microcontroller (24) of the receiver (12) to be reduced by reducing the number of iterations of the device position data calculating operations.

2. Device according to claim 1, **characterised in that** storage means (13) including cartographic data for a region are associated with the GPS receiver (12) to enable it to provide the processing unit (14) with precise position data if the position calculated by said receiver corresponds to a geographical point stored in said storage means.

3. Device according to claim 2, **characterised in that** the storage means (13) are an EEPROM type non-volatile memory into which the cartographic data can be electrically introduced and deleted.

4. Device according to any of claims 2 and 3, **characterised in that** the storage means (13) including the cartographic data for a region are incorporated in a module which can be removed from said device in order to be able to change said module as a function of a determined geographical region of use of said device.

5. Device according to claim 1, **characterised in that** the receiver (12) and the processing unit (14) each include a low power consuming microcontroller (24, 42), in particular an 8-bit microcontroller.

6. Device according to claim 1, **characterised in that** the operations in the receiver are clocked at clock frequencies higher than one MHz, whereas the operations in the processing unit are clocked at clock frequencies lower than 100 kHz.

7. Device according to any of claims 1 and 2, **characterised in that** the receiver (12), the altimeter (15), the processing unit (14) and the storage means (13) are fixed onto the same support.

8. Device according to any of the preceding claims, **characterised in that** it is incorporated in a timepiece, particularly a wristwatch, or in a portable telephone.

9. Device according to claim 1, **characterised in that** the receiver (12) is arranged to send to the processing unit (14), in addition to the position data (X, Y, Z), quality parameters (DOPG) extracted from the radio waves transmitted by the satellites (20) so that the processing unit (14) can determine the precision of the position data received from the receiver.

10. Method for determining horizontal and vertical positions for operating the device according to any of the preceding claims, **characterised in that** it includes the steps of:
- calibrating the pressure sensor altimeter (15) to a predetermined initial altitude using data processed and provided by the processing unit (14),
- transmitting an altitude value of the calibrated altimeter (15) to the processing unit (14),
- sending a signal (Z=h) corresponding to the altitude value of the calibrated altimeter (15) from the processing unit (14) to a microcontroller (24) of the GPS receiver (12) to enable the calculating time of the microcontroller (24) of the receiver to be reduced by reducing the number of iterations of the position data calculating operations as a function of the radio waves received from several satellites (20), and
- transmitting the position data calculated by the receiver (12) to the processing unit (14) so that they are processed and displayed on display means (16).

11. Method according to claim 10, **characterised in that** the data for calibrating the altimeter (15) to a predetermined precise altitude is extracted from memory means (13) including cartographic data for a region and associated with the GPS receiver (12) for transmission to the processing unit (14).

12. Method according to claim 10, **characterised in that** in addition to the position data, the receiver (12) transmits quality parameters (DOPG) extracted from the radio waves received from the satellites (20) so that the processing unit (14) can determine the precision of the position data received from the receiver.

13. Method according to claim 12, **characterised in that**, in addition to the altitude value, the altimeter (15) transmits to the processing unit (14) a quality factor (QUAL) of said altitude value, and **in that** a comparison between the quality parameters (DOPG) of the receiver and the quality factor (QUAL) of the altimeter is carried out in the unit in order to determine the precise horizontal and vertical positions to be displayed.

14. Method according to claim 13, **characterised in that** the altimeter (15) is calibrated again to a predetermined altitude if the result of the comparison shows that the quality parameters (DOPG) originating from the receiver are better than the quality factor (QUAL) originating from the altimeter.

15. Method according to claim 10, **characterised in that** at the same place whose altitude has been stored, the pressure variations of the altimeter (15) sensor converted into altitude variations are used to determine, in the processing unit (14), meteorological conditions to be displayed, the altimeter being subsequently calibrated to the stored altitude.

16. Use of the device according to claim 1 for evaluating meteorological conditions, **characterised in that** the pressure sensor altimeter (15) calibrated to a predetermined initial altitude is arranged to provide, at an equivalent altitude to an altitude stored in a preceding period of time, pressure variations converted into altitude variations transmitted to the processing unit (14) so that it determines meteorological conditions to be displayed.
